# EUROPEAN PATENT APPLICATION

(11) **EP 4 039 543 A1**
(43) Date of publication of application: **10.08.2022**
(21) Application number: 21182688.8
(22) Date of filing: 30.06.2021
(51) Int. Cl.: B60R 1/12, B60Q 1/26, B60Q 9/00, B60Q 1/50, B60Q 1/52, B60Q 5/00, B62J 6/24

(54) **REARVIEW SAFETY WARNING DEVICE OF A VEHICLE**

(30) Priority: 03.02.2021 TW 110104040
(71) Applicant: AEON MOTOR Co., Ltd., 743 Tainan City (TW)
(72) Inventor: LIN, Tong-Min, Tainan City (TW)
(74) Representative: Pallini Gervasi, Diego

(57) **Abstract**

A rearview safety warning device of a vehicle has a rearview mirror assembly (10), a display unit (40), a wireless transmission unit (20), and a processing unit (30). The rearview mirror assembly (10) has a mirror (12) having a mirror-surface area (120) and a display area (121). The display unit (40) displays a warning information through the display area (121) of the mirror (12). The wireless transmission unit (20) communicates with a mobile device (50) via a wireless communication technique. The processing unit (30) is signally connected to the display unit (40) and the wireless transmission unit (20). The processing unit (30) receives a traffic data (M) from the mobile device (50) via the wireless transmission unit (20) and activates the display unit (40) to display the warning information according to the traffic data (M).

## Description

### 1. Field of the Invention

The present invention relates generally to a warning device, and more particularly to a rearview safety warning device.

### 2. Description of Related Art

Traffic signs, such as a speed limit sign and a speed-camera sign, are provided along road sides. The purpose of the traffic signs is to be visible for the driver of the vehicle traveling on the road, such that the driver may obey the rules provided by the traffic signs.

However, traditional traffic signs are mounted on the road sides with brackets and provide a static warning effect. When the driver is driving the vehicle, the driver not only has to pay attention to the road conditions in front of and around the vehicle, but also has to divert the attention to the traditional traffic signs. Especially, when the vehicle passes through the traditional traffic sign so fast, the driver can see the traditional traffic sign just in a moment. As a result, the driver may not firmly keep the rule of the traffic sign in mind or may not clearly see the traffic sign, and thus may violate the traffic rules.

An objective of the present invention is to provide a rearview safety warning device of a vehicle to overcome the defect that the driver may not firmly keep the rule of the traffic sign in mind or may not clearly see the traffic sign when the driver is driving the vehicle because the traditional traffic signs only provide the static warning effect.

The rearview safety warning device of the present invention has a rearview mirror assembly, a display unit, a wireless transmission unit, and a processing unit. The rearview mirror assembly has a mirror having a mirror-surface area and a display area. The display unit displays a warning information through the display area of the mirror. The wireless transmission unit communicates with a mobile device via a wireless communication technique. The processing unit is signally connected to the display unit and the wireless transmission unit. The processing unit receives a traffic data from the mobile device via the wireless transmission unit and activates the display unit to display the warning information according to the traffic data.

According to the rearview safety warning device of the present invention, when the rider/driver is riding/driving the vehicle, the rider/driver not only can see the reflection in the mirror-surface area, but also can observe the warning information displayed on the display area. The processing unit continuously determines whether to activate the display unit to display the warning information based on the traffic data. No matter where the rider/driver is, the rider/driver may just pay attention to the mirror to notice whether the warning information is displayed on the display area or not. Although the rider/driver carelessly misses the traffic signs, the present invention can properly provide the rider/driver with the warning information, such as an excessive-speed warning or a speed-camera warning. Therefore, the defect due to the traditional traffic signs just providing the static warning effect as mentioned above is overcome. The driver can focus attention on the road conditions in front of and around the vehicle and obey the traffic rule based on the warning information provided by the present invention.

### IN THE DRAWINGS

Fig. 1 is a schematic view of an embodiment of the rearview safety warning device of the present invention applied to a vehicle;
Fig. 2 is a schematic view of another embodiment of the rearview safety warning device of the present invention applied to a vehicle;
Fig. 3 is a schematic view of another embodiment of the rearview safety warning device of the present invention having an auxiliary indicating lamp;
Fig. 4 is a circuit block diagram of an embodiment of the rearview safety warning device of the present invention;
Fig. 5 is a cross-sectional view of the supporting structure of the rearview safety warning device of the present invention;
Fig. 6 is a schematic view of another embodiment of the rearview safety warning device of the present invention applied to a vehicle;
Fig. 7 is a waveform diagram of the real-time vehicle speed of an embodiment of the present invention;
Fig. 8 is a schematic view of an embodiment of the rearview safety warning device of the present invention displaying the vehicle-speed indicating bar;
Fig. 9 is a circuit block diagram of another embodiment of the rearview safety warning device of the present invention; and
Fig. 10 is a circuit block diagram of another embodiment of the rearview safety warning device of the present invention.

A rearview safety warning device of the present invention is applied to a vehicle. For example, the vehicle may be an electric vehicle, a vehicle powered by fuel (such as petrol and diesel), or a hybrid electric vehicle. Or for example, the vehicle may be a scooter, a heavy motorcycle, a sedan, a bus, a truck, or an engineering vehicle. It is to be noted that the vehicle for the rearview safety warning device of the present invention is not limited to said vehicle mentioned above.

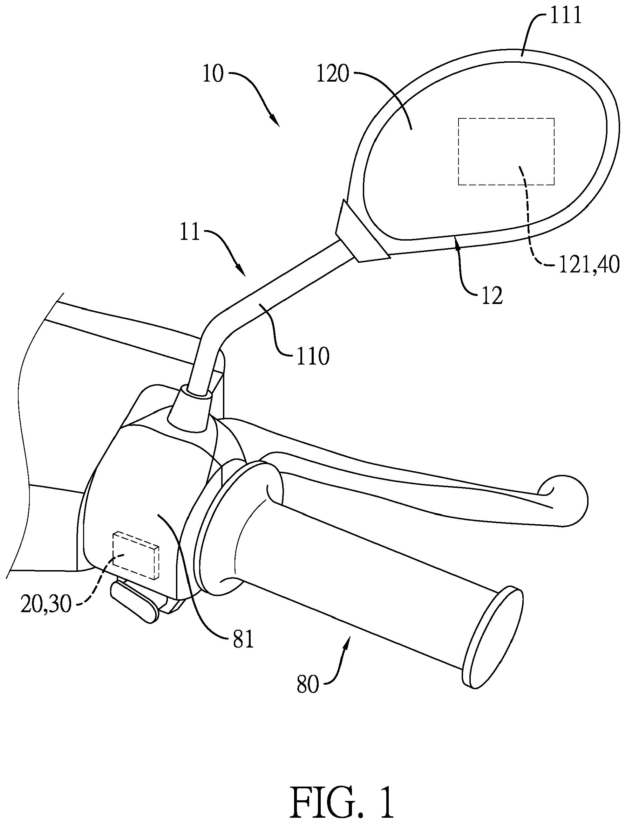

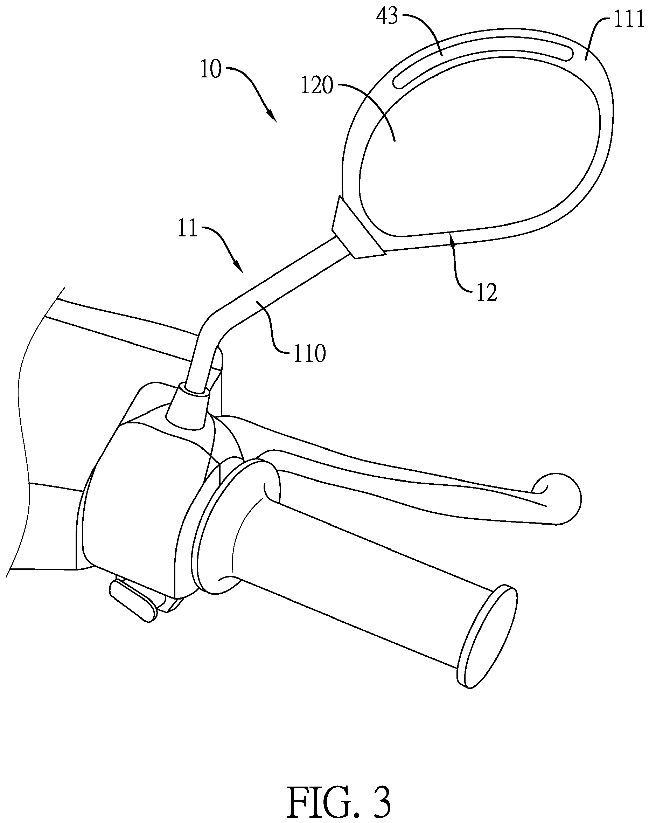

With reference to Figs. 1 to 4, an embodiment of the rearview safety warning device of the present invention comprises a rearview mirror assembly 10, a wireless transmission unit 20, a processing unit 30, and a display unit 40. The rearview mirror assembly 10 comprises a supporting structure 11 and a mirror 12. The rearview mirror assembly 10 shown in Figs. 1 to 3 is an example for being mounted on a steering handle 80 of a scooter. The present invention may further comprise an auxiliary indicating lamp 43 as shown in Fig. 3. The present invention may receive a working voltage from a vehicle battery or an additional battery.

The supporting structure 11 of the rearview mirror assembly 10 may be mounted on the steering handle 80 of the scooter. The rearview mirror assembly 10 is not limited to be a right-side rearview mirror assembly or a left-side rearview mirror assembly. In the embodiment of the present invention, the rearview mirror assembly 10 is the right-side rearview mirror assembly. The structure of the left-side rearview mirror assembly may be deduced from the right-side rearview mirror assembly.

The mirror 12 is mounted on the supporting structure 11 to be visible for people. The mirror 12 may be a light-transmittable reflective mirror. The mirror 12 has a mirror-surface area 120 and a display area 121. The display area 121 is adaptive to display a warning information. A distribution range of the mirror-surface area 120 may entirely include and overlap the display area 120. When a person looks at the mirror 12 of the rearview mirror assembly 10 and meanwhile the display area 121 displays the warning information, the person not only sees a reflection in the mirror-surface area 120, but also observes the warning information displayed on the display area 121. On the other hand, when a person looks at the mirror 12 of the rearview mirror assembly 10 but the display area 121 does not display the warning information, the person only sees a reflection in the mirror-surface area 120. With reference to Fig. 3, the auxiliary indicating lamp 43 may be a light emitting diode (LED) lamp or an LED light bar. The auxiliary indicating lamp 43 is mounted on the rearview mirror assembly 10. The auxiliary indicating lamp 43 may be disposed above, below, at the left side, or at the right side of the mirror 12, such that the auxiliary indicating lamp 43 is visible. The rider/driver of the vehicle and a person behind the vehicle may see the mirror 12 and the auxiliary indicating lamp 43 at the same time. As shown in Fig. 3, the auxiliary indicating lamp 43 is disposed above the mirror 12 as an example.

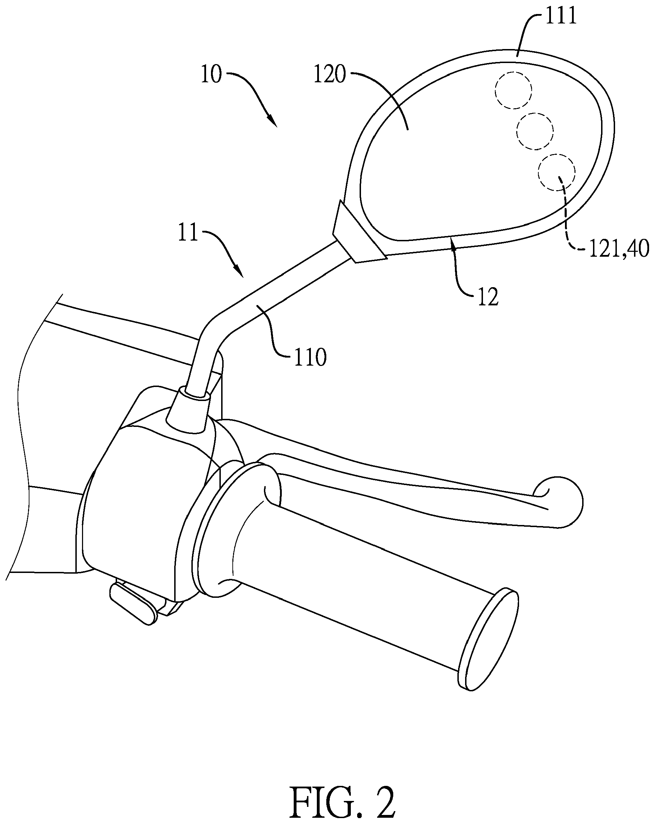

The display unit 40 may be mounted in the supporting structure 11. The display unit 40 may be mounted on a rear surface of the mirror. A position of the display unit 40 corresponds to a position of the display area 121. The display unit 40 displays the warning information through the display area 121. For example, the display unit 40 may be a displayer. The displayer may be, but not limited to, a liquid crystal display (LCD) or an organic light-emitting diode (OLED) display. As shown in Fig. 1, the positon of the display area 121 corresponds to a display screen of the displayer. The warning information is an image displayed by the displayer. In another embodiment, the display unit 40 may comprise multiple LED modules. As shown in Fig. 2, the warning information displayed on the display area 121 is a lighting signal or a change of the lighting signal showed by the multiple LED modules. For example, the lighting signal or the change of the lighting signal may be flashing, frequency change of the flashing, color, change of colors, and so on.

The wireless transmission unit 20 communicates with a mobile device 50 via a wireless communication technique, such that the wireless transmission unit 20 and the mobile device 50 may perform a two-way data transmission. The wireless communication technique may be a short-range wireless communication technique, such as (but not limited to) Bluetooth, near field communication (NFC), WiFi, and so on.

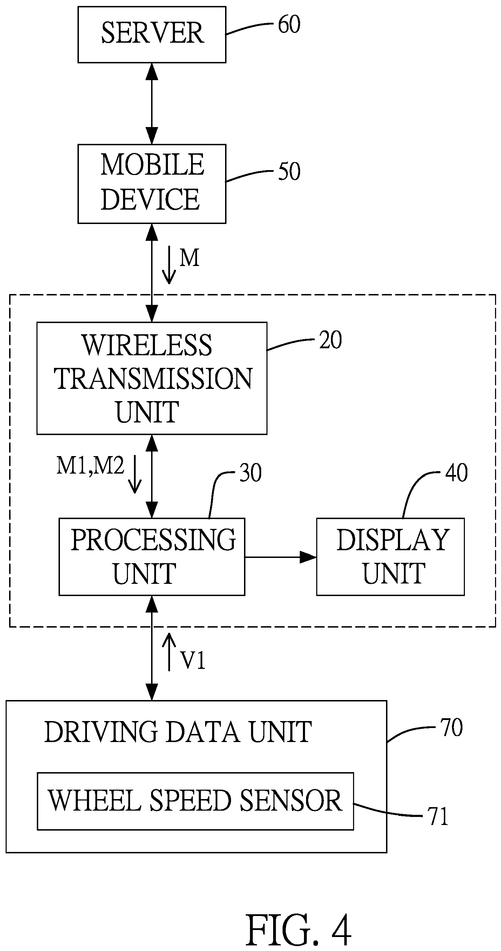

The mobile device 50 may be, but not limited to, a smart phone, a smart watch, or a tablet. The mobile device 50 is adapted to be installed and to execute an application (APP). The mobile device 50 may launch and perform a global positioning system (GPS) function to generate a positioning coordinate data. The instant positioning coordinate data may include latitude, longitude, and corresponding positioning time in order to indicate an instant position of the mobile device 50. Because a user carries the mobile device 50 with himself and rides/drives the vehicle, the positioning coordinate data may indicate an instant position of the vehicle. Hence, said positioning coordinate data may be also defined as an instant positioning coordinate data. The mobile device 50 may communicate with a server 60 via a mobile communication technique. The mobile communication technique may be, but not limited to, a fourth generation (4G) mobile communication technique, a fifth generation (5G) mobile communication technique, or a further next generation mobile communication technique. The server 60 may be a cloud server. The server 60 stores road coordinates of a country or districts and traffic data corresponding to the road coordinates. For example, the traffic data may comprise a speed limit value and/or a speed camera information. The mobile device 50 may download the road coordinates and the traffic data and select the traffic data according to the instant positioning coordinate data generated by the GPS function. With reference to Fig. 4, the mobile device 50 transmits the traffic data M, which is selected according to the instant positioning coordinate data, to the wireless transmission unit 20.

The processing unit 30 is signally connected to the display unit 40 and the wireless transmission unit 20. The processing unit 30 may perform a two-way data transmission with the mobile device 50 via the wireless transmission unit 20. The processing unit 30 has functions including control, data processing, data computing, program executing, and so on. The processing unit 30 may be a vehicle control unit (VCU) or an electronic control unit (ECU) of the vehicle. Or, as shown in Fig. 1, the processing unit 30 and the wireless transmission unit 20 may be integrated-circuit (IC) chips mounted in a shell 81 connected to the steering handle 80.

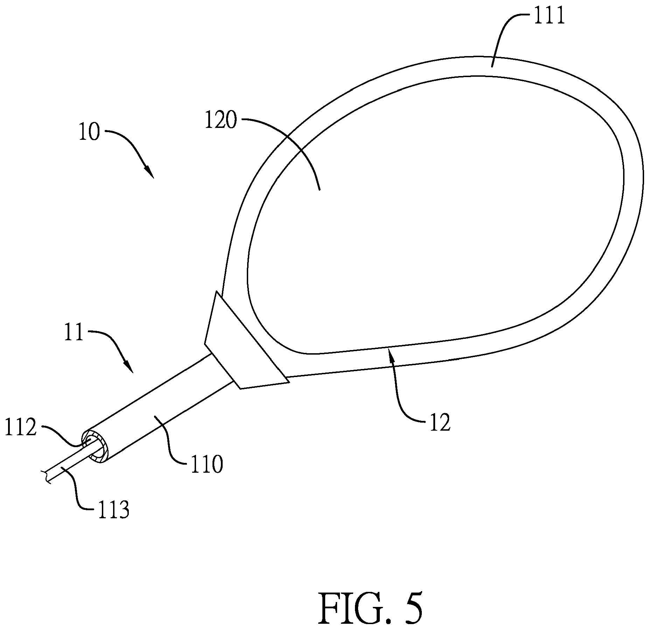

Signal connection between the processing unit 30 and the display unit 40 may be wired connection or wireless connection. With reference to Figs. 1 and 5, the supporting structure 11 of the rearview mirror assembly 10 may comprise a supporting tube 110 and a mirror base 111. The supporting tube 110 has two terminals. One terminal of the supporting tube 110 is connected to the steering handle 80. The mirror base 111 is mounted on the other terminal of the supporting tube 110. The mirror 12 and the display unit 40 are mounted on the mirror base 111. The mirror 12 is disposed on an exterior side of the display unit 40. As shown in Fig. 3, the auxiliary indicating lamp 43 and the mirror 12 are disposed on a same side of the mirror base 111. The supporting tube 110 may be a hollow tube, such that the supporting tube 110 has a wiring space 112 as shown in Fig. 5. At least one physical wire 113 connected between the processing unit 30 and the display unit 40 may be mounted through the wiring space 112 of the supporting tube 110. In addition, any wire for other purposes may be mounted through the wiring space 112 of the supporting tube 110, too.

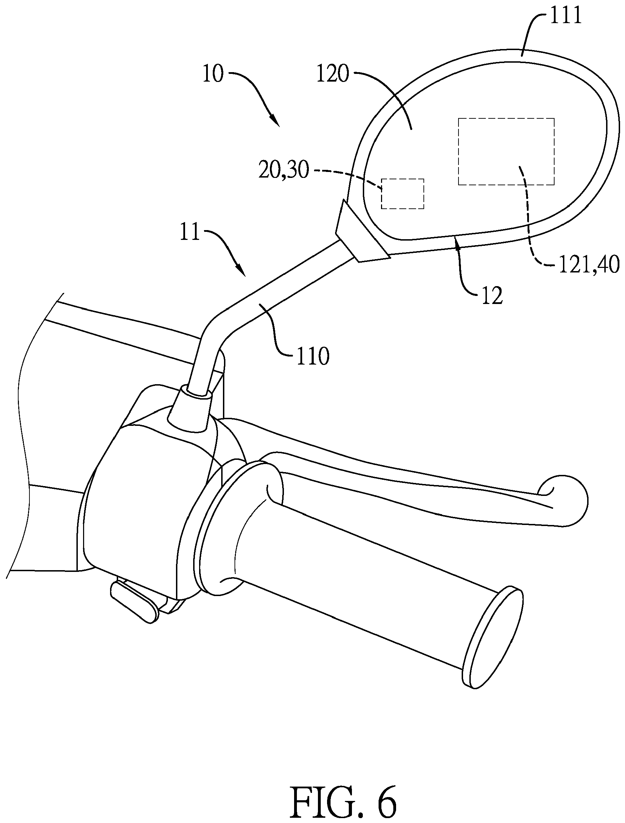

In another embodiment of the present invention as shown in Fig. 6, the processing unit 30 and the wireless transmission unit 20 may be mounted in the mirror base 111 and at a rear side of the mirror 12. Hence, the processing unit 30 may be directly electrically connected to the display unit 40 without said physical wire in the wiring space 112 of the supporting tube 110.

With reference to Fig. 4, the processing unit 30 may be signally connected to a driving data unit 70 of the vehicle. Signal connection between the processing unit 30 and the driving data unit 70 may be wired connection or wireless connection. For example, the driving data unit 70 may be an on-board diagnostics (OBD) system. The processing unit 30 may communicate with the driving data unit 70 via a data bus, such as a controller-area-network (CAN) bus. The driving data unit 70 is to provide the processing unit 30 with driving data of the vehicle. For example, the driving data unit 70 may receive and provide driving data related to vehicle status. The driving data may include signals of sensors, signals of indicating lamps, signals of key statuses (such as key ON/key OFF), navigation map information, signals of on-vehicle components, and so on. The driving data unit 70 may comprise a wheel speed sensor 71. The wheel speed sensor 71 may be a Hall-effect sensor. The wheel speed sensor 71 is adapted to sense the vehicle's speed and output a real-time vehicle speed VI to the processing unit 30. Hence, the processing unit 30 may receive the real-time vehicle speed VI of the vehicle from the driving data unit 70.

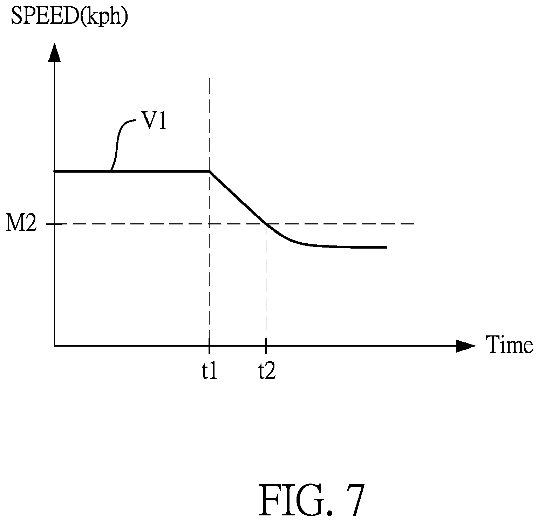

Based on the connection configuration as mentioned above, with reference to Fig. 4, the processing unit 30 may receive the traffic data M from the mobile device 50 via the wireless transmission unit 20. Basically, the processing unit 30 activates the display unit 40 according to the traffic data M. Or, the processing unit 30 activates the display unit 40 according to the real-time vehicle speed VI in addition to the traffic data M. For example, when the traffic data M received by the processing unit 30 comprises the speed camera information M1, the processing unit 30 activates the display unit 40 to display the warning information through the display area 121 of the mirror 12 according to the speed camera information M1, wherein the warning information may be an image, a lighting signal, or a change of the lighting signal for a purpose to provide a speed-camera warning to the rider/driver. Or, when the traffic data M received by the processing unit 30 comprises the speed limit value M2, the processing unit 30 may determine whether the real-time vehicle speed VI is higher than the speed limit value M2. For example, with reference to Fig. 7, the processing unit 30 receives the speed limit value M2 at t1. When the processing unit 30 determines that the real-time vehicle speed VI is higher than the speed limit value M2 (within a duration between t1 and t2), the processing unit 30 activates the display unit 40 to display the warning information through the display area 121 of the mirror 12, wherein the warning information may be an image, a lighting signal, or a change of the lighting signal for a purpose to provide an excessive-speed warning to the rider/driver. Hence, it could be deduced that when the traffic data M received by the processing unit 30 comprises both the speed camera information M1 and the speed limit value M2, the processing unit 30 may activate the display unit 40 to provide both the speed-camera warning and the excessive-speed warning. Therefore, the warning information is visible for the rider/driver to directly effectively catch the rider's/driver's attention to know the vehicle is excessively speeding or the instant road section has speed cameras.

As mentioned above, a format of the traffic data M may include characters or codes. For example, the processing unit 30 may recognize the characters or the codes (such as "A0") in the traffic data M as the speed camera information M1. Or, the processing unit 30 may recognize other characters or other codes (such as "60kph") in the traffic data M as the speed limit value M2.

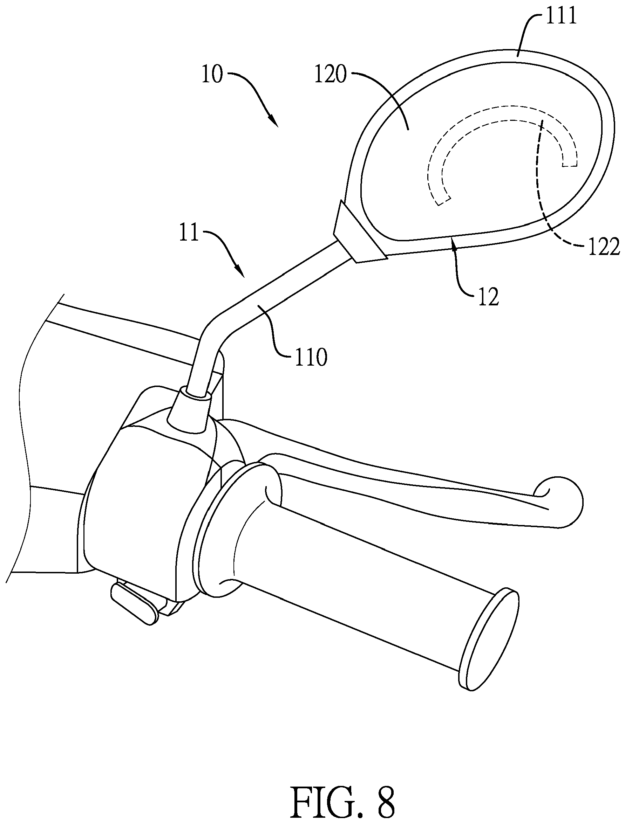

The driving data provided by the driving data unit 70 as mentioned above is traditionally displayed on a dashboard of the vehicle. In the present invention, in order to display the driving data through multiple approaches, the processing unit 30 receives the driving data from the driving data unit 70 and activates the display unit 40 to display the driving data through the display area 121 of the mirror 12. Hence, the driving data displayed on the display area 121 of the mirror 12 is consistent with the driving data displayed on the dashboard of the vehicle. For example, with reference to Figs. 1 and 8, the display area 121 may display a vehicle-speed indicating bar (speed light bar) 122. In the embodiment of the present invention, the processing unit 30 may control the display unit 40 to display the vehicle-speed indicating bar 122 and change a color and/or a brightness of the vehicle-speed indicating bar 122 according to a variation of the real-time vehicle speed V1. Therefore, the vehicle-speed indicating bar 122 is visible for the rider/driver to directly effectively catch the rider's/driver's attention to know the instant vehicle speed is fast, proper, or slow. Besides, when the traffic data M received by the processing unit 30 comprises the speed camera information M1 and the speed limit value M2, and the processing unit 30 determines that the real-time vehicle speed VI is higher than the speed limit value M2, the processing unit 30 may activate the vehicle-speed indicating bar 122 to flash or display other light signals or other changes of the light signals. Hence, the vehicle-speed indicating bar 122 may also warn the rider/driver against excessive speeding. The rider/driver may be guided to slow down the vehicle speed in advance. The safety for the rider/driver and the people on the road could be improved.

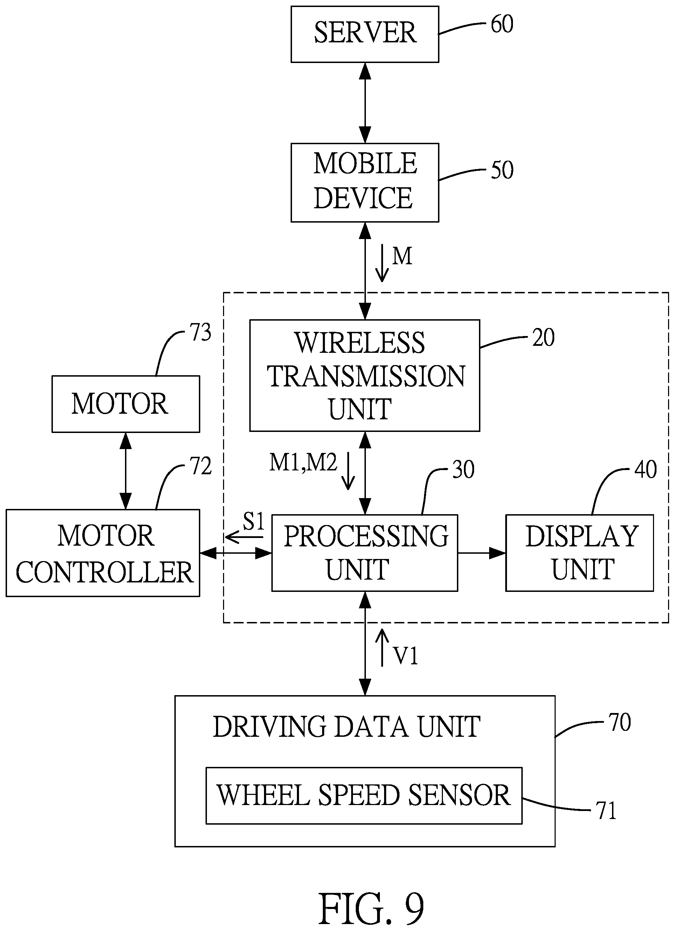

In addition to the warning function as mentioned above, the present invention further provides a speed control function. With reference to Fig. 9, an electric scooter as an example comprises a motor controller 72 and a motor 73. The motor controller 72 is adapted to adjust a motor speed of the motor 73 in order to control a driving speed of the electric scooter. The processing unit 30 of the present invention may be signally connected to the motor controller 72. For example, the processing unit 30 may communicate with the motor controller 72 via the data bus, such as the controller-area-network (CAN) bus. When the traffic data M received by the processing unit 30 comprises the speed limit value M2, the processing unit 30 may determine whether the real-time vehicle speed VI is higher than the speed limit value M2. When the processing unit 30 determines that the real-time vehicle speed VI is higher than the speed limit value M2, the processing unit 30 outputs a speed-limiting command S1 to the motor controller 72. The motor controller 72 may limit the motor speed of the motor 73 according to the speed-limiting command S1 to limit the real-time vehicle speed VI of the electric scooter to be equal to or lower than the speed limit value M2. At this time, when the real-time vehicle speed VI of the electric scooter is slowing down due to the speed-limiting command S1, the rider not only sees the warning information (excessive-speed warning) on the display area 121, but also feels a deceleration, so as to effectively catch the rider's attention. The rider may directly know the instant road section has a speed limit.

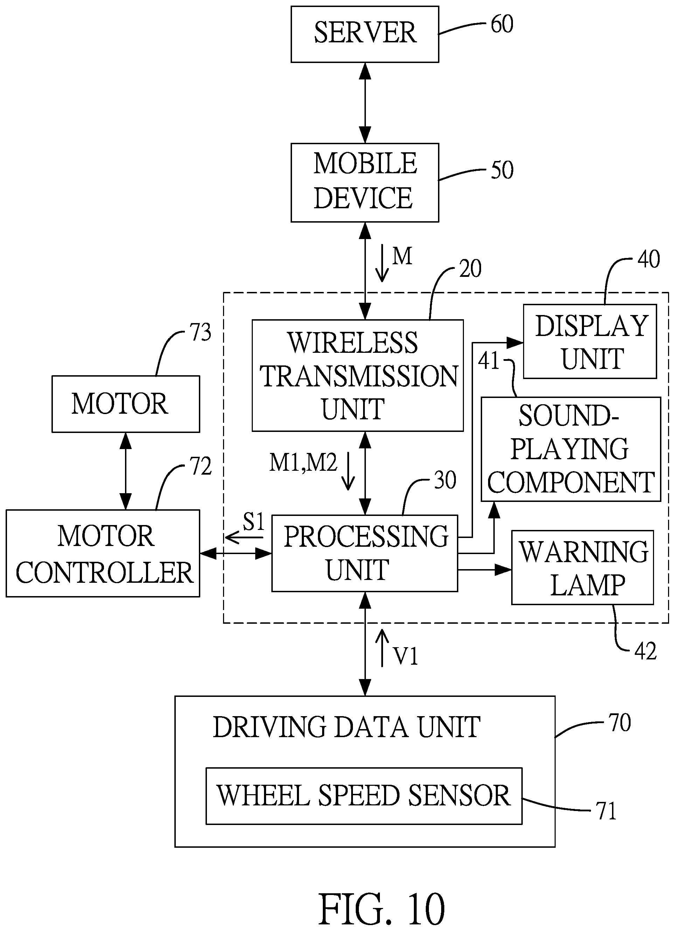

With reference to Fig. 10, the rearview safety warning device of the present invention may further comprise a sound-playing component 41. The sound-playing component 41 may be a speaker or a buzzer. The sound-playing component 41 may be mounted on a tail of the vehicle. The sound-playing component 41 is electrically connected to the processing unit 30. Under a condition that the real-time vehicle speed VI is higher than the speed limit value M2, when the processing unit 30 outputs the speed-limiting command S1 to the motor controller 72 (the vehicle is accelerating), the processing unit 30 also activates the sound-playing component 41 to play a warning sound as a warning message. By doing so, other people behind or near the vehicle may hear the warning sound and the warning sound may raise their attention, such that the rider/driver behind the accelerating vehicle may adaptively decrease the speed to avoid colliding with the vehicle. With reference to Fig. 10, the rearview safety warning device of the present invention may further comprise a warning lamp 42. The warning lamp 42 may be an LED lamp or an LED light bar. The warning lamp 42 may be mounted on the tail of the vehicle. The warning lamp 42 is electrically connected to the processing unit 30. Similarly, Under a condition that the real-time vehicle speed VI is higher than the speed limit value M2, when the processing unit 30 outputs the speed-limiting command S1 to the motor controller 72, the processing unit 30 also activates and lightens the warning lamp 42 to catch attention of other people behind the vehicle. Another embodiment of the present invention may comprise both the sound-playing component 41 and the warning lamp 42.

In conclusion, the mirror-surface area 120 and the display area 121 are defined in the mirror 12 of the rearview mirror assembly 10. When the rider/driver looks at the mirror 12 of the rearview mirror assembly 10 and meanwhile the display unit 121 displays the warning information, the rider/driver not only sees the reflection in the mirror-surface area 120, but also observes the warning information displayed on the display area 121. Hence, the rider/driver may know an instant road condition and to adopt a proper measure. For example, the proper measure may be to brake the vehicle to decelerate, to change the lane in advance, or to park the vehicle at roadside temporarily. Besides, a person behind the vehicle equipped with the rearview safety warning device of the present invention may see the display area 121 of the rearview mirror assembly 10, and such person may notice whether the warning information is displayed on the display area 121 to know the instant road condition. Therefore, the present invention has an effect of warning other people around the vehicle equipped with the rearview safety warning device of the present invention.

The rearview safety warning device of the present invention is adapted to be mounted on various kinds of vehicles for the rider/driver to see it. The processing unit 30 is signally connectable to the data bus of the vehicle. The user's mobile device 50 is adapted to be installed and to execute the application (APP), such that the processing unit 30 may communicate with the mobile device 50 and perform the safety-warning functions as mentioned above. For a vehicle with a traditional rearview mirror assembly, the user may just replace the traditional rearview mirror assembly with the rearview safety warning device of the present invention for performing the safety-warning functions as mentioned above. In other words, it is unnecessary for the user to purchase a new vehicle. The traditional rearview mirror assembly or the rearview safety warning device of the present invention is a part of the vehicle. Therefore, a cost to replace the traditional rearview mirror assembly with the rearview safety warning device of the present invention is much lower than a cost to purchase a new vehicle. The present invention has an advantage of lower replacement cost, so as to interest the user to have and use the rearview safety warning device of the present invention.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A rearview safety warning device of a vehicle, **characterized in that** the rearview safety warning device comprises:
a rearview mirror assembly (10) comprising a mirror (12) having a mirror-surface area (120) and a display area (121);
a display unit (40) displaying a warning information through the display area (121) of the mirror (12);
a wireless transmission unit (20) communicating with a mobile device (50) via a wireless communication technique; and
a processing unit (30) signally connected to the display unit (40) and the wireless transmission unit (20), wherein the processing unit (30) receives a traffic data (M) from the mobile device (50) via the wireless transmission unit (20) and activates the display unit (40) to display the warning information according to the traffic data (M).

2. The rearview safety warning device as claimed in claim 1, wherein
the display unit (40) is a displayer;
a position of the display area (121) corresponds to a position of a display screen of the displayer; and
the warning information is an image displayed by the displayer.

3. The rearview safety warning device as claimed in claim 1, wherein
the display unit (40) comprises multiple LED modules; and
the warning information is a lighting signal or a change of the lighting signal displayed by the multiple LED modules.

4. The rearview safety warning device as claimed in claim 1, wherein
the traffic data (M) received by the processing unit (30) comprises a speed camera information (M1); and
the processing unit (30) activates the display unit (40) to display the warning information through the display area (121) of the mirror (12) according to the speed camera information (M1).

5. The rearview safety warning device as claimed in claim 1 or 4, wherein
the processing unit (30) is signally connected to a driving data unit (70) of the vehicle to receive a real-time vehicle speed (VI) from the driving data unit (70);
the traffic data (M) received by the processing unit (30) comprises a speed limit value (M2); and
when the processing unit (30) determines that the real-time vehicle speed (VI) is higher than the speed limit value (M2), the processing unit (30) activates the display unit (40) to display the warning information through the display area (121) of the mirror (12).

6. The rearview safety warning device as claimed in claim 1, wherein
the processing unit (30) is signally connected to a driving data unit (70) of the vehicle to receive driving data from the driving data unit (70);
the processing unit (30) activates the display unit (40) to display the driving data through the display area (121) of the mirror (12); and
the driving data displayed on the display area (121) of the mirror (12) is consistent with information displayed on a dashboard of the vehicle.

7. The rearview safety warning device as claimed in claim 1, wherein
the rearview mirror assembly (10) comprises a supporting structure (11); and
the mirror (12) is mounted on the supporting structure (11).

8. The rearview safety warning device as claimed in claim 7, wherein the supporting structure (11) comprises:
a supporting tube (110) having a wiring space (112); and
a mirror base (111) mounted on a terminal of the supporting tube (110);
wherein the mirror (12) and the display unit (40) are mounted on the mirror base (111);
wherein at least one physical wire (113) connected between the processing unit (30) and the display unit (40) is mounted through the wiring space (112) of the supporting tube (110).

9. The rearview safety warning device as claimed in claim 7, wherein the processing unit (30) is mounted in a mirror base (111) of the supporting structure (11).

10. The rearview safety warning device as claimed in claim 1, wherein
the processing unit (30) is signally connected to a driving data unit (70) of the vehicle to receive a real-time vehicle speed (VI) from the driving data unit (70);
the traffic data (M) received by the processing unit (30) comprises a speed limit value (M2); and
when the processing unit (30) determines that the real-time vehicle speed (VI) is higher than the speed limit value (M2), the processing unit (30) outputs a speed-limiting command (S1).

11. The rearview safety warning device as claimed in claim 10, wherein
the rearview safety warning device comprises a sound-playing component (41) electrically connected to the processing unit (30); and
when the processing unit (30) outputs the speed-limiting command (S1), the processing unit (30) also activates the sound-playing component (41).

12. The rearview safety warning device as claimed in claim 10 or 11, wherein
the rearview safety warning device comprises a warning lamp (42) electrically connected to the processing unit (30); and
when the processing unit (30) outputs the speed-limiting command (S1), the processing unit (30) also activates the warning lamp (42).

13. The rearview safety warning device as claimed in claim 1, wherein
the processing unit (30) is signally connected to a driving data unit (70) of the vehicle to receive a real-time vehicle speed (VI) from the driving data unit (70);
the processing unit (30) controls the display unit (40) to display a vehicle-speed indicating bar (122) and changes a color and/or a brightness of the vehicle-speed indicating bar (122) according to a variation of the real-time vehicle speed (VI).

14. The rearview safety warning device as claimed in claim 1, wherein the rearview safety warning device comprises an auxiliary indicating lamp (43) mounted on a mirror base (111) of the rearview mirror assembly (10).
